# EUROPEAN PATENT SPECIFICATION

(11) **EP 0 583 613 B1**
(45) Date of publication and mention of the grant of the patent: **10.09.1997**
(21) Application number: 93111226.2
(22) Date of filing: 13.07.1993
(51) Int. Cl.: B29D 30/70, B29C 53/58

(54) **Method of producing a vehicle tire reinforced tread belt**
Verfahren zur Herstellung eines verstärkten Reifengürteles
Procédé de fabrication d'une ceinture de pneumatique renforcée

(30) Priority: 17.07.1992 IT TO920615
(43) Date of publication of application: 23.02.1994
(73) Proprietor: BRIDGESTONE CORPORATION, Tokyo 104 (JP)
(72) Inventor: Siegenthaler, Karl J., I-00100 Roma (IT)
(74) Representative: Jorio, Paolo, Dr. Ing.

(56) References cited:
- EP-A- 0 162 687
- DE-A- 1 934 018
- FR-A- 2 337 033
- FR-A- 2 361 230
- US-A- 3 458 146

## Description

The present invention relates to a method of producing a vehicle tire reinforced tread belt.

More specifically, the present invention relates to a method of producing a reinforced tread belt defined by two superimposed reinforced annular tread plies with oppositely-inclined reinforcing wires.

Road vehicle tires are known to feature, between the carcass and the tread, a reinforced tread belt normally defined by two reinforced annular tread plies, each of which is normally produced from a calendered ply with longitudinal reinforcing wires. The calendered ply is cut transversely, at a respective angle in relation to the perpendicular to the reinforcing wires, into a number of reinforced portions of the same width (measured perpendicular to the cutting direction) as the reinforced tread plies being produced. The portions are then spliced end to end, i.e. at the ends coinciding with the lateral edges of the calendered ply, to form a single reinforced strip of the same width as the respective reinforced tread ply, and which is produced by cutting the strip to size parallel to the reinforcing wires, and splicing the opposite ends of the resulting strip portion.

The above method of producing reinforced tread belt plies presents several drawbacks. Firstly, the joints between the various component portions and between the opposite ends of the strip portion constitute discontinuous elements invariably affecting the uniformity of the finished tire. Secondly, each reinforcing wire in the strip portion is a portion of a respective longitudinal wire in the original calendered ply. Consequently, as the "history" of the longitudinal wires in the calendered ply normally varies from one wire to another, each wire portion in the reinforced strip portion introduces into the finished tire an independent variable, the effect and nature of which are totally unpredictable and may negatively affect the physical characteristics of the finished tire.

It is an object of the present invention to provide as straightforward a method as possible of producing reinforced tread plies, and which at the same time provides for substantially overcoming the aforementioned drawbacks.

According to the present invention, there is provided a method of producing a vehicle tire reinforced tread belt defined by at least two superimposed reinforced tread plies with oppositely-inclined reinforcing wires; said method being characterized by the fact that the reinforced tread belt is produced from a tubular annular element formed, at least partially, by winding a wire in a coil about a rigid annular support by feeding the wire at a first given speed along an annular path extending through the annular support, and by rotating the annular support about its axis at a second given speed; said coil presenting a pitch depending on the ratio of said two speeds, and comprising a number of turns, each defined by two oppositely-inclined branches respectively outside and inside said annular support; the inclination of said outer and inner branches also depending on the ratio of said speeds; and the tubular element being cut along opposite lateral lines of the annular support for producing the two reinforced tread plies.

The invention will now be described by way of example with reference to the accompanying drawings, in which:
Fig.1 shows a schematic view in perspective of a device for performing one stage in the method according to the present invention;
Fig.2 shows a schematic view in perspective of the Fig.1 device during a further stage in the method according to the present invention;
Fig.3 shows a schematic view in perspective, with parts removed for simplicity, of a detail in Fig.s 1 and 2;
Fig.4 shows a schematic view in perspective, with parts removed for simplicity, of yet a further stage in the method according to the present invention;
Fig.5 shows an enlarged cross section of a detail in Fig.4;
Fig.6 shows a cross section of a detail in Fig.5 at the final stage in the method according to the present invention.

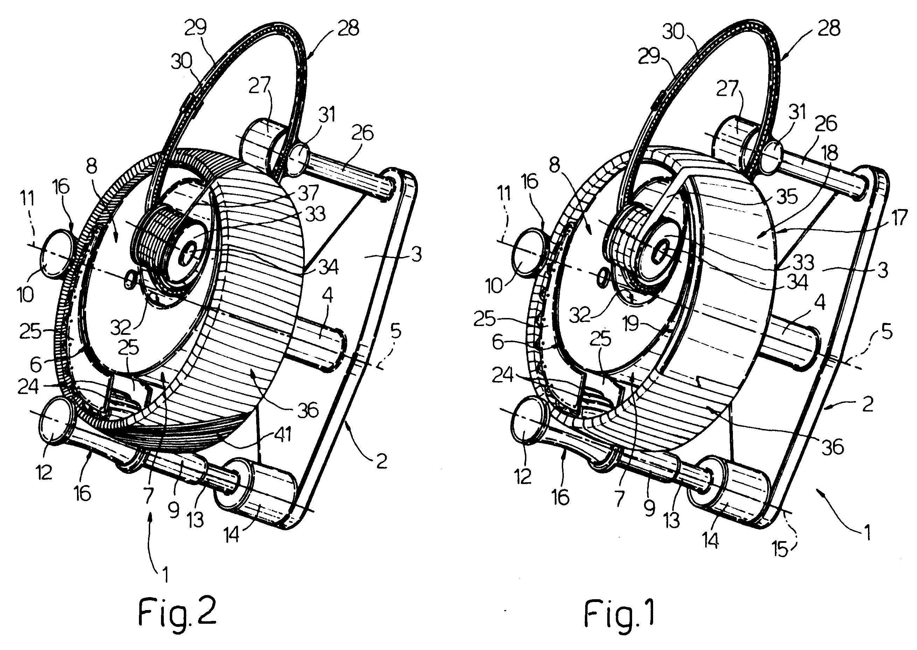

Number 1 in Fig.1 indicates a winding device comprising a fixed frame 2 in turn comprising a substantially vertical, substantially triangular plate 3 from the center portion of which projects a fixed shaft 4 having a substantially horizontal axis 5 extending perpendicular to plate 3. In addition to plate 3 and shaft 4, frame 2 also comprises a drum 6 integral with shaft 4 and defined laterally by a cylindrical surface 7 off-centered in relation to axis 5, and axially by two opposite flat circular surfaces 8 (only one of which is shown).

From the bottom two vertices of plate 3 there project a further two shafts 9 (only one of which is shown), a first of which (not shown) supports an idle roller 10 rotating about its axis 11 parallel to axis 5, and the second of which is fitted with a roller 12, and is integral and coaxial with the output shaft 13 of a motor 14 fitted to plate 3 and designed to rotate shaft 13 (clockwise in Fig.1) about its axis 15 parallel to axis 5.

Rollers 10 and 12 are identical, consist of bodies of revolution defined externally by a concave lateral surface 16 having generating lines substantially in the form of a segment of a circle, and support a circular-section ring or annular support 17 coaxial with axis 5.

As shown more clearly in Fig.5, annular support 17 is defined by a looped elongated plate having a cross section substantially in the form of an isosceles trapezium, the longer outward-facing side of which constitutes a generating line of a convex annular surface 18 conjugate to surface 16 of rollers 10 and 12, and the shorter inward-facing side of which constitutes a generating line of a concave annular surface 19 substantially parallel to surface 18. The opposite axial ends of surface 19 are connected to respective axial ends of surface 18 by two oppositely-tapered truncated-cone-shaped surfaces 20 tapering inwards of annular support 17 and defining, with surface 18, two axial end edges 21 of annular support 17.

Along surfaces 18, 19 and 20, provision is made for a number of substantially equally-spaced annular grooves coaxial with axis 5 and each housing a ring 22 of ferromagnetic material, while edges 21 present further annular grooves, each housing a ring 23 having an outer cutting edge and made of relatively hard material.

As shown in Fig.1, drum 6 is off-centered in relation to axis 5 on the opposite side of axis 5 to roller 12, and annular support 17 presents surface 18 contacting surface 16 of both rollers 10 and 12, and surface 19 substantially contacting the most eccentric portion of surface 7. A portion of surface 19 extending slightly beyond each end of the portion of surface 18 between rollers 10 and 12 presents a number of equally-spaced barrel-shaped rollers 24 having generating lines conjugate to those of surface 19, and each supported idly, so as to rotate about its axis parallel to axis 5, between two plates 25 integral with drum 6, substantially coplanar with surfaces 8, and housed in the gap between surfaces 7 and 19.

As shown in Fig.1, from a third vertex of plate 3, an arm 26 projects parallel to axis 5, and is connected at the free end to the casing of a motor 27 powering a known chain conveyor 28. Conveyor 28 comprises a splittable, substantially circular, annular slideway 29 for a splittable, annular chain 30 engaged by a known toothed or recessed wheel 31 fitted to the output shaft (not shown) of motor 27 so as to travel anticlockwise (in Fig.1) along slideway 29.

Slideway 29 is fitted to the casing of motor 27 in a substantially radial plane in relation to annular support 17, or at a relatively small, variable angle in relation to said radial plane, and extends through an eccentric hole 32 formed through drum 6 parallel to axis 5, and of such a diameter as to enable the passage of a spool 33 mounted substantially idly on a pin 34 fitted to chain 30 and substantially perpendicular to the plane of slideway 29.

In actual use (Fig.1), spool 33 is first loaded with a skim stock strip 35, one end of which is simply pressed on to the surface of annular support 17; and motors 14 and 27 are operated so as to rotate annular support 17 anticlockwise (in Fig.1) about axis 5, and to drive pin 34 anticlockwise (in Fig.1) along slideway 29 at such respective speeds as to wind strip 35 into a continuous tubular layer 36 about annular support 17.

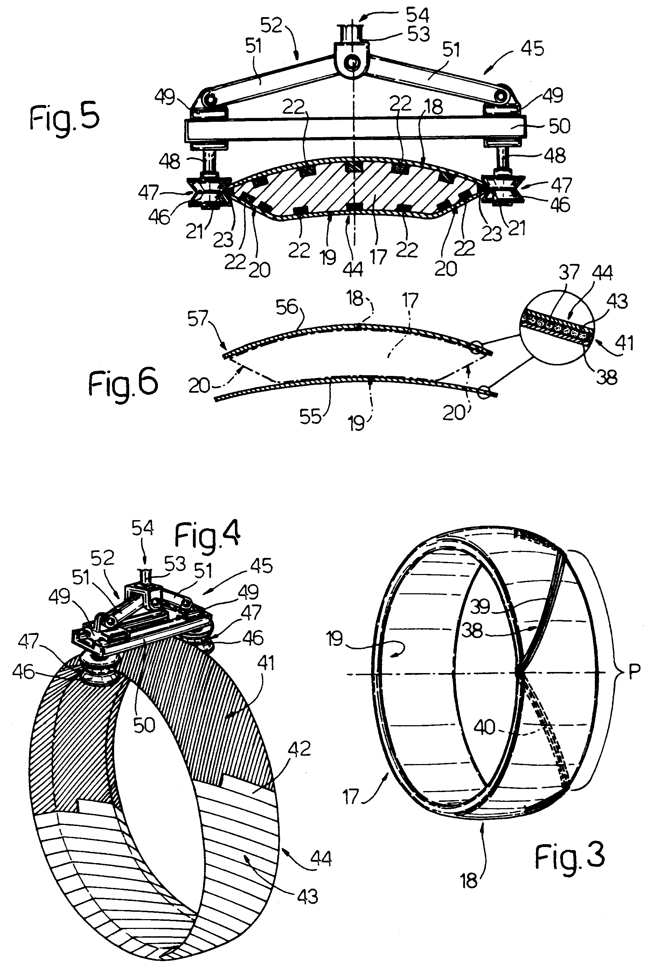

Upon completion of tubular layer 36, which in certain cases may even be dispensed with, spool 33 (Fig.2) is loaded with wire 37 preferably coated with green elastomeric material, and one end of which is simply pressed on to layer 36; and motors 14 and 27 are again operated so as to rotate annular support 17 anticlockwise (in Fig.1) about axis 5, and to drive pin 34 anticlockwise (in Fig.1) along slideway 29 at such respective speeds as to wind wire 37 in a cylindrical coil about annular support 17. As shown in Fig.3, said coil presents a given pitch P depending on the speed ratio of annular support 17 and pin 34, and comprises a number of turns 38 consisting of an outer branch 39 and an inner branch 40 oppositely inclined in relation to the perpendicular to axis 5, and the inclination of which also depends on said speed ratio.

A number of complete turns of annular support 17 results in the formation of a number of coils, the turns 38 of which are slightly offset in relation to those of the other coils, so as to produce, using a single continuous wire 37, a tubular layer 41 on top of tubular layer 36.

Upon completion of tubular layer 41, spool 33 is preferably (but not necessarily) loaded with a further skim stock strip 42 for forming a further tubular layer 43 (Fig.4) on top of tubular layer 41 and defining, with layers 41 and 36, a tubular annular element 44 (Fig.s 4 and 5) comprising a reinforcing assembly (Fig.6) defined by layer 41 and preferably (but not necessarily) covered both internally and externally by two layers of elastomeric material defined by layers 38 and 43.

In connection with the above, it should be pointed out that, as it is formed about annular support 17, each of layers 36, 41 and 43 is stitched by rollers 24 on to inner surface 19 of annular support 17, so as to assume, on surface 19, an outwardly-convex shape. The stitching action of rollers 24 provides for ensuring firm grip of branches 40 of turns 38 to surface 19, a substantially constant given tension of wire 37, and firm mutual grip of layers 36, 41 and 43; while rings 22 act on layer 41 in such a manner as to grip tubular element 44 firmly to the surface of annular support 17.

Upon completion of tubular element 44 (Fig.s 4 and 5), annular support 17 is fitted with a cutting device 45 comprising two rollers 46, each having a groove 47 for receiving a respective edge 21 of annular support 17. Rollers 46 are mounted idly on respective parallel shafts 48 extending from respective slides 49 running along a single slideway 50 parallel to axis 5. Slides 49 are connected to the legs 51 of a compass 52 connected centrally to the output rod 53 of an actuator 54 for moving slides 49 towards each other and pressing rollers 46 on to edges 21. By moving cutting device 45 along annular support 17, tubular element 44 is pressed against edges 21 and so cut (Fig.6) into two reinforced tread plies 55 and 56 of a reinforced tread belt 57 wherein plies 55 and 56 present oppositely-inclined reinforcing wires, the inclination of which may be varied as required.

More specifically (Fig.6), tread plies 55 and 56 are annular and, in addition to being spliceless, present, at the outset, the same transverse curvature required of plies 55 and 56 inside the finished tire (not shown). Moreover, the internal tread ply 55 is wider than the external tread ply 56, and presents an outside diameter slightly smaller than the inside diameter of ply 56. When forming the tire (not shown), ply 55 must thus be stretched more than ply 56, so as to contact the inner surface of ply 56 for forming belt 57, thus enabling the formation of plies 55 and 56 of different tensions for enhancing, in known manner, certain physical characteristics of the finished tire.

According to a variation not shown, drum 6 presents a number of eccentric through holes similar to hole 32, and each engaged by a respective conveyor similar to 28, for simultaneously employing a number of wires 37 with which to form layer 41. The number of wires and the corresponding number of variables introduced thereby will, in any case, be relatively small and undoubtedly far fewer than those of currently produced tires.

According to a further variation not shown, cutting device 45 may be replaced by a straightforward percussion element, such as a hammer, for cutting tubular element 44 by simply striking it along edges 21.

## Claims

1. A method of producing a vehicle tire reinforced tread belt (57) defined by at least two superimposed reinforced tread plies (55, 56) with oppositely-inclined reinforcing wires; said method being characterized by the fact that the reinforced tread belt (57) is produced from a tubular annular element (44) formed, at least partially, by winding a wire (37) in a coil about a rigid annular support (17) by feeding the wire (37) at a first given speed along an annular path (29) extending through the annular support (17), and by rotating the annular support (17) about its axis (5) at a second given speed; said coil presenting a pitch (P) depending on the ratio of said two speeds, and comprising a number of turns (38), each defined by two oppositely-inclined branches (39, 40) respectively outside and inside said annular support (17); the inclination of said outer and inner branches (39, 40) also depending on the ratio of said speeds; and the tubular element (44) being cut along opposite lateral lines (21) of the annular support (17) for producing the two reinforced tread plies (55, 56).

2. A method as claimed in Claim 1, characterized by the fact that said wire (37) is a wire (37) coated with elastomeric material.

3. A method as claimed in Claim 1 or 2, characterized by the fact that said wire (37) is a metal wire (37).

4. A method as claimed in any one of the foregoing Claims, characterized by the fact that said rigid annular support (17) is defined by a looped elongated plate (17); the tubular element (44) being cut along opposite annular lateral edges (21) of said plate (17) for producing said two reinforced tread plies (55, 56).

5. A method as claimed in Claim 4, characterized by the fact that said two edges (21) define respective cutting edges (21); the tubular element (44) being cut by being pressed against said two edges (21).

6. A method as claimed in Claim 4 or 5, characterized by the fact that said looped plate (17) presents a convex outer surface (18) and a concave inner surface (19); the tubular element (44) being subjected to the action of pressure means (24) whereby it is gradually pressed against said concave surface (19) and stretched in contact with said convex surface (18).

7. A method as claimed in Claim 6, characterized by the fact that said pressure means (24) are stitching means (24) for stitching the tubular element (44) against said concave surface (19).

8. A method as claimed in Claim 6 or 7, characterized by the fact that said wire (37) is a metal wire (37); the tubular element (44) being maintained contacting said concave surface (19) via magnetic attraction.

9. A method as claimed in any one of the foregoing Claims, characterized by the fact that said coil is covered, at least on one side, by a protective layer (38, 43) formed by winding a skim stock strip (35, 42) in a coil about the rigid annular support (17).

## Patentansprüche

1. Verfahren zur Herstellung eines verstärkten Fahrzeugreifen-Laufflächengurtes (57), der von mindestens zwei übereinanderliegenden, verstärkten Laufflächenlagen (55, 56) mit entgegengesetzt geneigten Verstärkungsdrähten gebildet ist; wobei das genannte Verfahren dadurch **gekennzeichnet** ist, daß der verstärkte Laufflächengurt (57) aus einem schlauchförmigen, ringförmigen Element (44) hergestellt wird, das mindestens teilweise durch Wickeln eines Drahts (37) zu einer Spule rund um einen starren ringförmigen Träger (17) gebildet ist, indem man den Draht (37) unter einer ersten, vorgegebenen Geschwindigkeit längs eines ringförmigen Weges (29) zuführt, der sich durch den ringförmigen Träger (17) erstreckt, und durch Drehen des ringförmigen Trägers (17) um seine Achse (5) mit einer zweiten, vorgegebenen Geschwindigkeit; wobei die genannte Spule einen Windungsabstand (P) darbietet, der vom Verhältnis der beiden genannten Geschwindigkeiten abhängt, und eine Anzahl von Windungen (38) aufweist, die jeweils von zwei entgegengesetzt geneigten Zweigen (39, 40) auf der Außenseite bzw. der Innenseite des genannten ringförmigen Trägers (17) gebildet sind; wobei die Neigung des genannten äußeren und inneren Zweiges (39, 40) ebenfalls vom Verhältnis der genannten Geschwindigkeiten abhängt; und wobei das schlauchförmige Element (44) längs gegenüberliegender seitlicher Linien (21) des ringförmigen Trägers (17) zerschnitten wird, um die beiden verstärkten Laufflächenlagen (55, 56) zu erzeugen.

2. Verfahren wie beansprucht in Anspruch 1, dadurch **gekennzeichnet,** daß der genannte Draht (37) ein Draht (37) ist, der mit Elastomermaterial beschichtet ist.

3. Verfahren wie beansprucht in Anspruch 1 oder 2, dadurch **gekennzeichnet,** daß der genannte Draht (37) ein Metalldraht (37) ist.

4. Verfahren wie beansprucht in irgendeinem der vorangehenden Ansprüche, dadurch **gekennzeichnet,** daß der genannte starre, ringförmige Träger (17) von einer zu einer Schlaufe gebogenen, länglichen Platte (17) gebildet ist; wobei das schlauchförmige Element (44) längs gegenüberliegender, ringförmiger Seitenkanten (21) der genannten Platte (17) zerschnitten wird, um die beiden verstärkten Laufflächenlagen (55, 56) zu bilden.

5. Verfahren wie beansprucht in Anspruch 4, dadurch **gekennzeichnet,** daß die beiden Kanten (21) jeweilige Schneiden (21) bilden; wobei das schlauchförmige Element (44) dadurch zerschnitten wird, daß es gegen die beiden genannten Kanten bzw. Schneiden (21) angedrückt wird.

6. Verfahren wie beansprucht in Anspruch 4 oder 5, dadurch **gekennzeichnet,** daß die genannte, zu einer Schlaufe gebogene Platte (17) eine konvexe Außenoberfläche (18) und eine konkave Innenoberfläche (19) darbietet; wobei das schlauchförmige Element (44) der Einwirkung von Druckmitteln (24) ausgesetzt wird, durch welche es nach und nach gegen die genannte konkave Oberfläche (19) angedrückt und in Berührung mit der genannten konvexen Oberfläche (18) gedehnt wird.

7. Verfahren wie beansprucht in Anspruch 6, dadurch **gekennzeichnet,** daß die genannten Druckmittel (24) Heftmittel (24) sind, um das schlauchförmige Element (44) an der genannten konkaven Oberfläche (19) anzuheften.

8. Verfahren wie beansprucht in Anspruch 6 oder 7, dadurch **gekennzeichnet,** daß der genannte Draht (37) ein Metalldraht (37) ist; wobei das schlauchförmige Element (44) über magnetische Anziehung in Berührung mit der genannten konkaven Oberfläche (19) gehalten wird.

9. Verfahren wie beansprucht in irgendeinem der vorangehenden Ansprüche, dadurch **gekennzeichnet,** daß die genannte Spule mindestens auf der einen Seite durch eine Schutzschicht (38, 43) abgedeckt ist, die dadurch gebildet wird, daß man einen Streifen aus Folienmaterial (skim stock strip) (35, 42) spulenartig um den starren, ringförmigen Träger (17) herumwickelt.

## Revendications

1. Procédé de fabrication d'une ceinture de pneumatique renforcée (57) définie par au moins deux couches superposées (55, 56) de bande de roulement renforcée comportant des fils de renforcement inclinés de façon opposée ; ledit procédé étant caractérisé par le fait que la ceinture renforcée (57) est fabriquée à partir d'un élément annulaire tubulaire (44) formé, au moins partiellement, en enroulant un fil (37) d'une bobine autour d'un support annulaire rigide (17) en amenant le fil (37) à une première vitesse donnée le long d'un trajet annulaire (29) s'étendant dans le support annulaire (17), et faisant tourner le support annulaire (17) autour de son axe (5) à une deuxième vitesse donnée ; ladite bobine présentant un pas (P) dépendant du rapport de ces deux vitesses, et comprenant un certain nombre de spires (38), définie chacune par deux branches (39, 40) inclinées de façon opposée respectivement à l'extérieur et à l'intérieur de ce support annulaire (17) ; l'inclinaison de ces branches extérieure et intérieure (39, 40) dépendant aussi du rapport de ces vitesses ; et l'élément tubulaire (44) étant coupé le long des lignes latérales opposées (21) du support annulaire (17) afin de fabriquer les deux couches de bande de roulement renforcée (55, 56).

2. Procédé selon la revendication 1, caractérisé par le fait que ledit fil (37) est un fil métallique (37) enrobé d'une matière élastomère.

3. Procédé selon l'une des revendications 1 ou 2, caractérisé par le fait que ledit fil (37) est un fil en métal (37).

4. Procédé selon l'une quelconque des revendications précédentes, caractérisé par le fait que ledit support annulaire rigide (17) est défini par une plaque allongée en boucle (17) ; l'élément tubulaire (44) étant coupé le long des bords latéraux annulaires opposés (21) de ladite plaque (17) pour fabriquer les deux couches de bande de roulement renforcée (55, 56).

5. Procédé selon la revendication 4, caractérisé par le fait que les deux bords (21) définissent des bords de coupe respectifs (21) ; l'élément tubulaire (44) étant coupé en étant pressé contre ces deux bords (21).

6. Procédé selon l'une des revendications 4 ou 5, caractérisé par le fait que ladite plaque en boucle (17) présente une surface extérieure convexe (18) et une surface intérieure concave (19) ; l'élément tubulaire (44) étant soumis à l'action de moyens de pression (24) au moyen desquels il est progressivement pressé contre ladite surface concave (19) et étiré en contact avec ladite surface convexe (18).

7. Procédé selon la revendication 6, caractérisé par le fait que lesdits moyens de pression (24) sont des moyens de fixation (24) destinés à fixer l'élément tubulaire (44) contre ladite surface concave (19).

8. Procédé selon l'une des revendications 6 ou 7, caractérisé par le fait que ledit fil (37) est un fil de métal (37) ; l'élément tubulaire (44) étant maintenu en contact avec ladite surface concave (19) par attraction magnétique.

9. Procédé selon l'une quelconque des revendications précédentes, caractérisé par le fait que ladite bobine est recouverte, au moins d'un côté, par une couche protectrice (38, 43) formée en enroulant une bande stockée en couché mince (35, 42) d'une bobine autour du support annulaire rigide (17).
